# EUROPEAN PATENT APPLICATION

(11) **EP 3 916 494 A1**
(43) Date of publication of application: **01.12.2021**
(21) Application number: 19917193.5
(22) Date of filing: 28.02.2019
(51) Int. Cl.: G05B 13/04

(54) **METHOD AND APPARATUS FOR UPDATING DATA OF INDUSTRIAL MODEL**

(71) Applicant: Siemens Aktiengesellschaft, 80333 München (DE)
(72) Inventor: CAO, Diansong, Shanghai Shalong Daxing District Beijing 100176 (CN)
(74) Representative: Isarpatent
(86) International application number: PCT/CN2019/076472
(87) International publication number: WO 2020/172851

(57) **Abstract**

The embodiments of the present disclosure provide a method for updating data of an industrial model, including: obtaining, from a parameter set associated with an industrial model, a variable set of a virtual object in the industrial model; defining a physical mirror template based on the variable set, where the physical mirror template represents at least one variable included in at least one physical mirror in the variable set and a format of the at least one physical mirror; obtaining operating status information of the field object from a data source associated with the field system; creating the at least one physical mirror based on the operating status information and the physical mirror template; and updating data of the industrial model by using the at least one physical mirror. According to the embodiments of the present disclosure, complex processing in data collection and industrial model data update stages is simplified, and a change of a status in a field system can be comprehensively and automatically tracked, thereby automatically keeping a configuration of the industrial model consistent with an actual condition of the field system.

## Description

### TECHNICAL FIELD

The present disclosure relates to the field of industrial control, and more specifically, to a method and an apparatus for updating data of an industrial model, a computing device, a computer-readable storage medium, and a program product.

### BACKGROUND

An industrial model is a digital model representing an industrial field system, which may be widely used in industrial manufacturing, research and development, analysis, or the like. For example, the field system may be copied digitally by using the industrial model, a behavior of the field system in a real environment is simulated, and virtual simulation is performed on, for example, a product, a manufacturing process, and even an entire factory, thereby improving production efficiency of product research and development, and manufacturing of a manufacturing enterprise. Data of the industrial model needs to be updated along with a change of the field system, to keep the data of the industrial model consistent with data of the field system, and an actual condition of the field system is reflected really, thereby accurately tracking, analyzing, and optimizing a field process in time. For example, the industrial model may be used for evaluating a quantity and quality of products, downtime analysis, a failure rate, or the like.

In the prior art, data (for example, an operation record of a production device and a status of a production system) required by the field system is usually collected manually, and the data of the industrial model is updated by using the collected data. The manually collected data is typically incomplete and complex in data format, and when there are a large quantity of field systems or there are a large quantity of field objects in the field system, a process of updating the industrial model corresponding to the field system by using the manually collected data is usually complex and inefficient.

### SUMMARY

In a current method for updating data of an industrial model, required data needs to be collected manually for various field systems, and data of an industrial model is updated by using the collected data. Therefore, when there are a relatively large quantity of field systems or there are a relatively large quantity of field objects in a field system, a large quantity of complex processing needs to be performed in data collection and industrial model data update stages. As a result, the method cannot be easily applicable to various applications.

A first embodiment of the present disclosure provides a method for updating data of an industrial model, including: obtaining, from a parameter set associated with an industrial model, a variable set of a virtual object in the industrial model, where the virtual object corresponds to a field object in a field system, and a value of each variable in the variable set is changeable during operation of the field object; defining a physical mirror template based on the variable set, where the physical mirror template represents at least one variable included in at least one physical mirror in the variable set and a format of the at least one physical mirror; obtaining operating status information of the field object from a data source associated with the field system, where the operating status information is associated with the variable set; creating the at least one physical mirror based on the operating status information and the physical mirror template; and updating data of the industrial model by using the at least one physical mirror.

In this embodiment, a variable set that is changeable during operation of a field object is obtained, and a physical mirror that reflects a status in a physical world is created by using a physical mirror template that represents a variable included in the physical mirror and a format of the physical mirror, so that complex processing in data collection and industrial model data update stages is simplified, and a change of the status in the physical world can be tracked comprehensively and automatically, thereby automatically updating data of an industrial model. In addition, the method is easily implemented to automatically keep the data of the industrial model consistent with an actual condition of the physical world (for example, the data of the industrial model is synchronized with data of the field system). In addition, according to the method, a variable of a virtual object of interest may be selected according to a requirement for tracking, and a specification requirement on the format is provided for the collected data, so as to be easily applicable to the various applications.

A second embodiment of the present disclosure provides an apparatus for updating data of an industrial model, including: a variable obtaining unit, configured to obtain, from a parameter set associated with an industrial model, a variable set of a virtual object in the industrial model, where the virtual object corresponds to a field object in a field system, and a value of each variable in the variable set is changeable during operation of the field object; a defining unit, configured to define a physical mirror template based on the variable set, where the physical mirror template represents at least one variable included in at least one physical mirror in the variable set and a format of the at least one physical mirror; an information obtaining unit, configured to obtain operating status information of the field object from a data source associated with the field system, where the operating status information is associated with the variable set; a creation unit, configured to create the at least one physical mirror based on the operating status information and the physical mirror template; and an updating unit, configured to update data of the industrial model by using the at least one physical mirror.

A third embodiment of the present disclosure provides a computing device, including a processor; and a memory, configured to store computer-executable instructions, the computer-executable instructions, when being executed, causing the processor to perform the method according to the first embodiment.

A fourth embodiment of the present disclosure provides a computer-readable storage medium, having computer-executable instructions stored thereon, the computer-executable instructions being used for performing the method according to the first embodiment.

A fifth embodiment of the present disclosure provides a computer program product, tangibly stored on a computer-readable storage medium and including computer-executable instructions, the computer-executable instructions, when being executed, causing at least one processor to perform the method according to the first embodiment.

### BRIEF DESCRIPTION OF THE DRAWINGS

Features, advantages, and other aspects of various embodiments of the present disclosure will become more apparent with reference to the accompanying drawings and the following detailed description. Several embodiments of the present disclosure are shown here in an exemplary rather than restrictive manner. In the drawings,
FIG. 1 is a flowchart of a method for updating data of an industrial model according to an embodiment of the present disclosure.
FIG. 2 is an example system for implementing the method in FIG. 1 according to an embodiment of the present disclosure.
FIG. 3 is a schematic diagram of an industrial model according to an embodiment of the present disclosure.
FIG. 4 is an exemplary configuration diagram of a variable of a virtual object in the example industrial model in FIG. 3.
FIG. 5 is a schematic diagram of a field system and an industrial model thereof according to another embodiment of the present disclosure.
FIG. 6 is an apparatus for updating data of an industrial model according to an embodiment of the present disclosure.
FIG. 7 is a block diagram of a computing device for updating data of an industrial model according to an embodiment of the present disclosure.

### DETAILED DESCRIPTION

Various exemplary embodiments of the present disclosure are described below in detail with reference to the accompanying drawings. Although exemplary methods and apparatuses described below include software and/or firmware executed in hardware of other components, it should be noted that, the examples are only illustrative and should not be considered as restrictive. For example, it is considered that any or all hardware, software, and firmware components can be implemented in hardware exclusively, in software exclusively, or in any combination of hardware and software. Therefore, although the exemplary methods and apparatuses have been described below, it is easy for a person skilled in the art to understand that the examples provided are not used to limit manners for implementing the methods and apparatuses.

In addition, architectures, functions, and operations of possible implementations of methods and systems according to various embodiments of the present disclosure are illustrated in the flowcharts and the block diagrams of the accompanying drawings. It should be noted that functions labeled in the blocks may also occur in an order different from that as labeled in the accompanying drawings. For example, two successive blocks may be basically performed in parallel, or they may be performed in an opposite order sometimes, depending on the functions involved. It should also be noted that each block in the block diagrams and/or the flowcharts, and a combination of blocks in the block diagrams and/or the flowcharts may be implemented using a dedicated hardware-based system for executing specified functions or actions, or may be implemented using a combination of dedicated hardware and computer instructions.

The terms "include" and "comprise" and similar terms used herein are open terms, that is, "include/comprise, but not limited to", indicating that other content may also be included. The term "based on" is "based at least in part on". The term "an embodiment" indicates "at least one embodiment", the term "another embodiment" indicates "at least one additional embodiment", and so on.

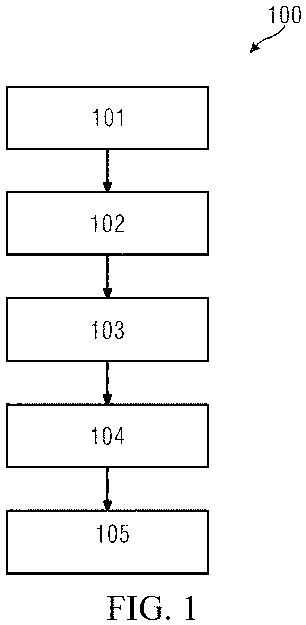

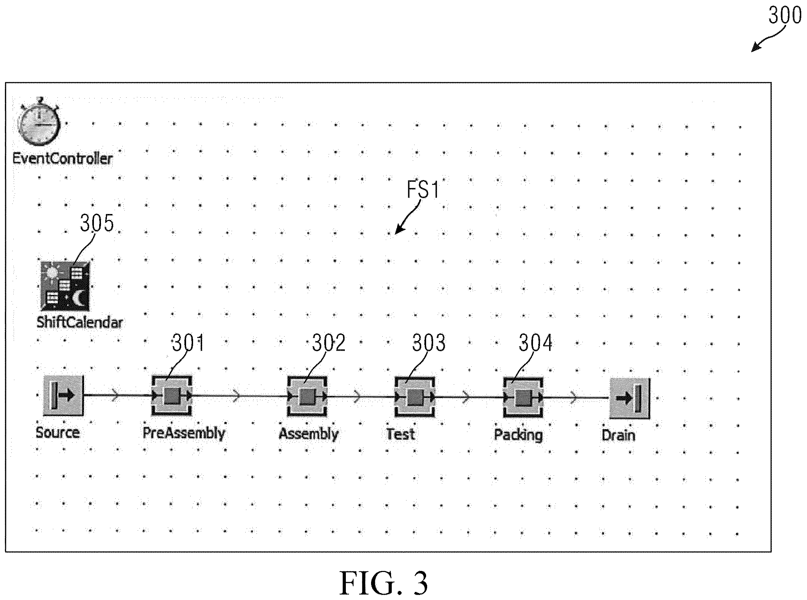

FIG. 1 is a method for updating data of an industrial model according to an embodiment of the present disclosure. Referring to FIG. 1, a method 100 starts from step 101. Step 101. Obtain, from a parameter set associated with an industrial model, a variable set of a virtual object in the industrial model, where the virtual object corresponds to a field object in a field system, and a value of each variable in the variable set is changeable during operation of the field object. The field system is a system that performs operations such as transmission, control, production, and manufacturing in a field. For example, the field system may be an industrial process facility such as a production line or a process control system in a factory. The field system may include one or more field objects, the field object is a field device of various tools or resources such as controllers, sensing devices, action devices, or combinations thereof (for example, a station integrated with a plurality of devices) used in an industrial process. The controller may include a programmable logic controller (PLC), an intelligent device, an industrial Internet of Things intelligent gateway, or the like, the sensing device may include a sensor, a button, a code scanner, or the like, and the action device may include a motor, a mechanical arm, or the like. The action device is configured to perform an operation on a product or drive a device that operates a product, and the sensing device is configured to sense some variables such as a time, a displacement, a quantity, and a specific feature of a product that need to be collected in a field process. The controller is communicatively coupled to the sensing device and the action device, sends control signals to the sensing device and the action device, controls the sensing device and the action device, and receives data sensed by the sensing device. A virtual object in an industrial model corresponding to each field object may have various configurable variables. Values of some variables (for example, a processing time of the field object) are changeable during operation of the field object, and values of some other variables (for example, a position of the field object) may remain unchanged during operation of the field object. Initially, a value of a variable of the virtual object in the industrial model is consistent with an initial condition of the field object in the field system. With the operation of the field system, the actual condition of the field object is different from the value of the variable of the virtual object corresponding to the field object due to a change in an operating status of the field object, resulting in mismatching between the field system and the industrial model. For example, an industrial model corresponding to a field system in a factory has two virtual objects "PreAssembly Station1" and "ShiftCalendar1", which respectively have variables "Processing Time" and "Shift" of which variable values are changeable during operation of a corresponding field object. In an example, initially, a value of the variable "Processing Time" of the virtual object "PreAssembly Station1" is configured to be 1 min (minutes). Subsequently, in the field system, when a workpiece is processed after reaching a corresponding field object, it may be determined that an actual processed time is 2 min after the processing is completed, and the increase of the processing time may be caused by, for example, aging of the field object or an environmental factor. In another example, initially, a value of the variable "Shift" of the virtual object "ShiftCalendar1" is configured to be "DayShift". Subsequently, in the field system, due to personnel scheduling and a task requirement, it may be determined, according to an operating status of a corresponding field object, that the value of the actual shift is changed into "NightShift". It should be understood that each virtual object may have any quantity of variables. For example, one virtual object may have zero, one, or more than one variable. In step 101, a change in a physical world may be associated with each virtual object in the industrial model by obtaining the variable set, and the change of a status in the physical world is tracked comprehensively without consuming a large quantity of manpower to manually collect required data. That is, the change in the physical world is represented as a dynamic change of a variable value of the virtual object. The variable set is described in detail by using a specific embodiment with reference to FIG. 3 below. In some embodiments, a trigger condition for obtaining the variable set of the virtual object may be any of the following cases: after the industrial model corresponding to the field system is initially established; when it is detected that the field object in the field system changes (for example, increase, deletion, or modification), so that the virtual object in the industrial model changes accordingly; or the variable set is obtained periodically at regular intervals.

In some embodiments, step 101 may include: obtaining the variable set from the parameter set according to an object property of the virtual object. For example, the object property may include an object type, an object use condition, and the like. In an example, when the object property is the object use condition, and the object use condition indicates that performance of a field object corresponding to the virtual object has changed (for example, the field object is worn, aging, or exceeds the normal lifetime, or the field object is replaced with a new field object), some parameters related to the performance may be obtained from the parameter set as a variable set. In another example, the parameter set may be a general variable library. For example, a uniform general variable library may be established for virtual objects in industrial models corresponding to field systems in a factory. That is, the general variable library may include variables of the virtual objects involved in the industrial models corresponding to the field systems in the factory, and values of the variables are changeable during operation of field objects. In addition, for convenience, for a plurality of the same/similar virtual objects, only a variable of one virtual object in the plurality of virtual objects may need to be stored in the general variable library. For example, the variables in the general variable library may adopt an object type of a virtual object as an index. For example, when the object type of the virtual object is "PreAssembly Station ", a variable "Processing Time" corresponding to the virtual object may be obtained by querying the object type from the general variable library. Establishing a uniform general variable library for a factory is not only applicable to different field systems and industrial models of the field systems in the factory, but also easy to expand. For example, when a new field system is added or an old field system is modified in the factory to add a new virtual object or modify an old virtual object in the industrial model, only the general variable library needs to be modified, that is, the new virtual object is added or a related variable of the old virtual object is modified (for example, increase, deletion, or change) in the general variable library.

Still referring to FIG. 1, subsequently, the method 100 proceeds to step 102. Step 102. Define a physical mirror template based on the variable set, where the physical mirror template represents at least one variable included in at least one physical mirror in the variable set and a format of the at least one physical mirror. The physical mirror template represents an abstraction of the physical world and is used for generating a physical mirror, and the physical mirror may represent a record set that records a value of a variable of a virtual object. Specifically, the physical mirror template specifies which variables in the variable set are to be included in the physical mirror and specifies a format of the physical mirror. In step 102, by defining the physical mirror template, a variable of a virtual object of interest may be selected according to a requirement for tracking, and a specification requirement on the format is provided for the collected data, so as to be easily applicable to the various applications. For example, data with the specification requirement may be easily converted for analysis and optimization of the field system.

In some embodiments, the format of the at least one physical mirror may include: a name of the at least one variable and a corresponding variable property, and the variable property includes at least one of a variable type, a data type, a collected time, and a collected zone. The name of the variable represents an identifier for identifying the variable. For example, the name of the variable may be implemented by using a placeholder and has a form of a field system identifier + a virtual object identifier + a variable such as FSX_PreAssemblyStationX_ProcessingTime, which represents a variable "Processing Time" of a virtual object "PreAssemblyStationX" in an industrial model corresponding to a field system "FSX". The variable type may represent a type of a variable such as control, feedback, transmission, indication, or a combination thereof. The data type may represent a type of a value of a variable such as an Internet Protocol (IP) type, a value type, a string type, a time type, an enumeration type, or a combination thereof. The collected time may represent that data related to a variable is collected in which time period. The collected zone may represent that data related to a variable is collected in which zone, and the zone may refer to a geographic location, a network address, or the like of a field object in the physical world. For example, the format of the physical mirror may be represented in the following form: Variable = [FSX_PreAssemblyStationX_ProcessingTime (the name of the variable)] and VariableProperties = [VariableType, DataType, CollectedTime, CollectedZone], where some of the variable properties may have default values. A specific format of the physical mirror specified in the physical mirror template may further provide a constraint definition on the format for the collected data to easily apply collected variables to various applications according to various variable properties.

Next, in step 103, operating status information of the field object is obtained from a data source associated with the field system, where the operating status information is associated with the variable set. For example, a field system has a field object "PreAssembly StationF1" in a factory, and the field object "PreAssembly StationF1" corresponds to the virtual object "PreAssembly Station1" in the industrial model. Operating status information of the field object "PreAssembly StationF1" may include times T1 and T2, the time T1 may represent a time when a workpiece reaches the "PreAssembly StationF1" to start processing, and the time T2 represents a time when the processing of the workpiece is completed, and both the times T1 and T2 are related to the variable "Processing Time" of the virtual object "PreAssembly Station1". Therefore, an actual value of the "Processing Time" = T2-T1. For example, the data source may be a sensing device for monitoring the operating status information of the field object in the field system or a database for storing related data (for example, the operating status information) of the field object in the field system.

In some embodiments, step 103 may include: obtaining the operating status information of the field object from the data source corresponding to an identifier of the field system or an identifier of the field object. For example, the data source may correspond to an identifier of the field system or an identifier of the field object.

Next, in step 104, the at least one physical mirror is created based on the operating status information and the physical mirror template. In step 104, the at least one physical mirror is generated by using the operating status information associated with the variable set and the physical mirror template defining the format of the physical mirror, to reflect the change of the field object in the physical world.

Subsequently, the method 100 proceeds to step 105, data of the industrial model is updated by using the at least one physical mirror. In this case, actual data of the field system may automatically keep consistent with configuration data of the industrial model by using the physical mirror.

In some embodiments, before step 101, the method 100 may include: establishing an industrial model corresponding to a field system based on feature information of a field object of the field system and a processing sequence. In the field system, a series of operations such as circulation production and testing are performed on materials (for example, raw materials, intermediate products, or products) by using field objects. Therefore, to cause the industrial model to correspond to the field system, feature information of the field objects in the field system and a processing sequence (that is, a process) of the materials need to be obtained. In some embodiments, the industrial model corresponding to the field system is established mainly for the purpose of field system performance analysis. Therefore, the feature information of the field objects may include a process relationship between stations, functions, properties, and network addresses of field objects at the stations, a connection/control relationship between the field objects or the like, and other information related to the field system performance analysis.

In some embodiments, step 104 of the method 100 may include: parsing the operating status information to determine a current value of at least one variable; formatting the current value of the at least one variable according to the physical mirror template; and including the at least one variable and the formatted current value of the at least one variable in the at least one physical mirror. For example, as previously described in step 103 by using the example, the operating status information of the field object "PreAssembly StationF1" may be parsed to obtain the times T1 and T2, a current value of the variable "Processing Time" may be determined by subtracting T1 from T2, the value of the variable is formatted according to a format indicated by the physical mirror template (for example, formatting is performed according to a data type of a time type, and the formatted current value of the variable "Processing Time" is stored in the physical mirror. In step 104, the current value of the variable of the virtual object may be collected according to the operating status information, and the current value of the variable is formatted to be stored in the physical mirror, so that the formatted value that reflects the change of the field object in the physical world is automatically collected and stored. In these embodiments, step 105 may include: updating a previous value of the at least one variable of the virtual object by using the current value of the at least one variable included in the at least one physical mirror. In step 105, because the formatted value that reflects the change of the field object in the physical world has been stored in the physical mirror, synchronization between the actual data of the field system and the configuration data of the industrial model is completed by updating the variable of the virtual object corresponding to the field object in a digital world, thereby simplifying the complex data processing when data of the industrial model is updated in the prior art.

In some embodiments, step 103 of the method 100 may include: obtaining operating status information of the field object in at least one time period, and step 104 may include: creating the at least one physical mirror based on the operating status information of the field object in the at least one time period and the physical mirror template. Physical mirrors are created based on different time periods, and update of the data of the industrial model may be divided according to a time axis to be applied to various cases. For example, when a field object fails or shuts down in a time period, an operating status of the field object may be abnormal in the time period, which cannot reflect a real change of the field object. In another example, for a special purpose, it is necessary to observe performance of a field object in different time periods (for example, one day, one week, or one month). In these embodiments, step 105 may include: selecting a target physical mirror from the created at least one physical mirror; and updating the data of the industrial model by using the target physical mirror. For example, the target physical mirror may be at least one of the at least one physical mirror. At least one physical mirror is selected from one or more physical mirrors in different time periods, and the data of the industrial model may be updated by using a physical mirror of interest in a specific time period, to analyze and optimize a field process in the specific time period.

In some embodiments, step 103 of the method 100 may include: obtaining operating status information of the field object in at least one spatial zone, and step 104 may include: creating the at least one physical mirror based on the operating status information of the field object in the at least one spatial zone and the physical mirror template. Physical mirrors are created based on different spatial zones, and update of the data of the industrial model may be divided according to a spatial zone to be applied to various cases. For example, when a field system or a field object of a field system is divided according to the spatial zone, physical mirrors of different zones may be created. In these embodiments, step 105 may include: selecting a target physical mirror from the created at least one physical mirror; and updating the data of the industrial model by using the target physical mirror. At least one physical mirror is selected from one or more physical mirrors in different spatial zones, and the data of the industrial model may be updated by using a physical mirror of interest in a specific spatial zone, to analyze and optimize a field process in the specific spatial zone.

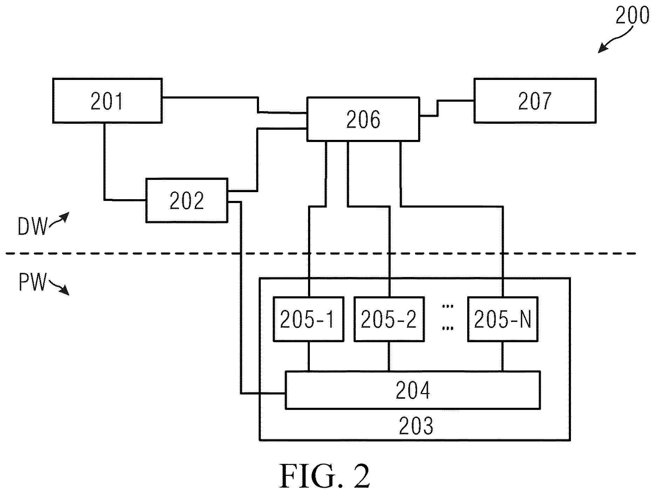

FIG. 2 is an example system 200 for implementing the method 100 in FIG. 1 according to an embodiment of the present disclosure. The system 200 includes a digital world DW and a physical world PW that are separated by using a dashed line. The digital world DW includes an initial industrial model 201, a physical mirror template 202, a model updater 206, and an updated industrial model 207. The physical world PW includes a physical system 203 corresponding to the industrial model 201, and the physical system 203 includes a physical mirror generator 204, configured to generate a plurality of physical mirrors 205-1, 205-2, ..., and 205-N. In the digital world DW, a variable set of a virtual object in the industrial model 201 may be obtained from a parameter set associated with the industrial model 201 (for example, in step 101 of the method 100), and the physical mirror template 202 is defined based on the variable set (for example, in step 102 of the method 100), where the physical mirror template 202 represents at least one variable included in at least one physical mirror (for example, one or more of N physical mirrors 205-1, 205-2, ..., and 205-N) in the variable set and a format of the at least one physical mirror. In the physical world PW, the physical system 203 may obtain operating status information of a field object (for example, in step 103 of the method 100), where the operating status information is associated with the variable set. Subsequently, the physical mirror generator 204 creates the at least one physical mirror (for example, one or more of the N physical mirrors 205-1, 205-2, ..., and 205-N) based on the operating status information and the physical mirror template 202 obtained (for example, received by using a network) from the digital world DW. Subsequently, in the digital world DW, the model updater 206 may update data of the initial industrial model 201 according to the physical mirror template 202 and the at least one physical mirror obtained (for example, received by using a network) from the physical world PW, to generate the updated industrial model 207.

FIG. 3 is a schematic diagram of an industrial model 300 corresponding to a field system FS1 according to an embodiment of the present disclosure. For convenience, a physical architecture of the field system FS1 is not shown. This is because the industrial model 300 is a digital model of the physical architecture, and virtual objects 301 to 305 in the industrial model 300 may be in one-to-one correspondence with field objects in the field system FS1. As shown in the industrial model 300 in FIG. 3, the virtual object 301 is "PreAssembly Station", the virtual object 302 is "Assembly Station", the virtual object 303 is "Test Station", the virtual object 304 is "Packing Station", and the virtual object 305 is "ShiftCalendar". The industrial model 300 further includes other objects "Source", "Drain", and "EventController". The object "Source" may be considered as a machine for generating parts or a receiving department that receives external parts, the object "Drain" may be considered as a delivery department of parts, and the object "EventController" is used for controlling start, stop, reset, and the like of emulation of the industrial model 300. The objects "Source" and "Drain" and the virtual objects 301 to 305 may simulate an entire field production process of parts from receiving → preassembly → assembly → packing → delivery.

As described above, in the physical architecture, the field system FS1 may have the field objects such as "PreAssembly StationFl", "Assembly StationFl", "Test StationFl", "Packing StationFl", and "ShiftCalendarF1" that correspond to the virtual objects 301 to 305. The variable set of the virtual object may be obtained (for example, in step 101 of the method 100), where a value of each variable in the variable set is changeable during operation of the field object. The following Table 1 shows an exemplary variable set of virtual objects in the industrial model 300 corresponding to the field system FS1:

**Table 1: The variable set of the virtual objects in the industrial model 300**

| Virtual object | Variable | Annotation |
|---|---|---|
| PreAssembly Station | Processing Time | Station processing time |
| Assembly Station | Processing Time | Station processing time |
| Test Station | Processing Time | Station processing time |
| Packing Station | Processing Time | Station processing time |
| ShiftCalendar | Shift | DayShift/NightShift |

As shown in Table 1, the virtual objects "PreAssembly Station", "Assembly Station", "Test Station", and "Packing Station" have a similar variable "Processing Time" to represent a processing time of a part in a station, and the virtual object "ShiftCalendar" has a variable "Shift" to represent a shift (for example, day shift/night shift).

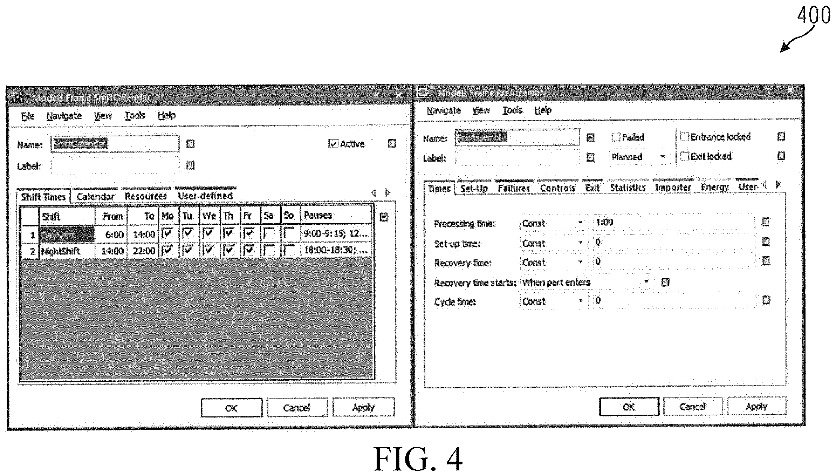

FIG. 4 is an exemplary configuration diagram 400 of variables of virtual objects 301 and 305 in the example industrial model 300 in FIG. 3. A left page in the configuration diagram 400 shows an exemplary configuration of a variable "Shift" of the virtual object 305, and a right page in the configuration diagram 400 shows an exemplary configuration of a variable "Processing Time" of the virtual object 301. As shown in FIG. 4, initially, values of the variables of the virtual objects 301 and 305 in the industrial model 300 are configured to be consistent with initial conditions of corresponding field objects in the field system FS1. For example, the variable "Shift" is configured to be equal to "DayShift", and the variable "Processing Time" is configured to be equal to 1 min.

In the embodiment shown in FIG. 3, the physical mirror template may be defined based on the variable set of Table 1, and the physical mirror template identifies at least one variable included in a physical mirror in the variable set and a format of the physical mirror (for example, in step 102 of the method 100). For example, the physical mirror template specifies that the variable "Processing Time" of the virtual object "PreAssembly Station" and the variable "Shift" of the virtual object "ShiftCalendar" need to be included in the physical mirror.

For the field system FS1, an example of the physical mirror template may be represented as follows:

```
//Physical Mirror Template for Field System FS 1
    Variables = {"Processing Time", "Shift"}
    Variable 1= "Processing Time";
    Format = "Variable1 = [FS1_PreAssemblyStation_ProcessingTime], VariableProperties =
 [VariableType=indication, DataType=time, CollectedTime=default, CollectedZone=default]";
    Variable2 = "Shift";
    Format = "Variable2 = [FS1_ShiftCalendar_Shift], VariableProperties =
 [VariableType=indication, DataType=time, CollectedTime=default, CollectedZone=default]".
    For the field system FS 1, an example of the physical mirror may be represented as follows:
    //Physical Mirror for Field System FS 1
    Variables = {"Processing Time", "Shift"}
    Variable1 FS1_PreAssemblyStation_ProcessingTime = 2 min;
    Variable2 FS1_ShiftCalendar_Shift = NightShift.
```

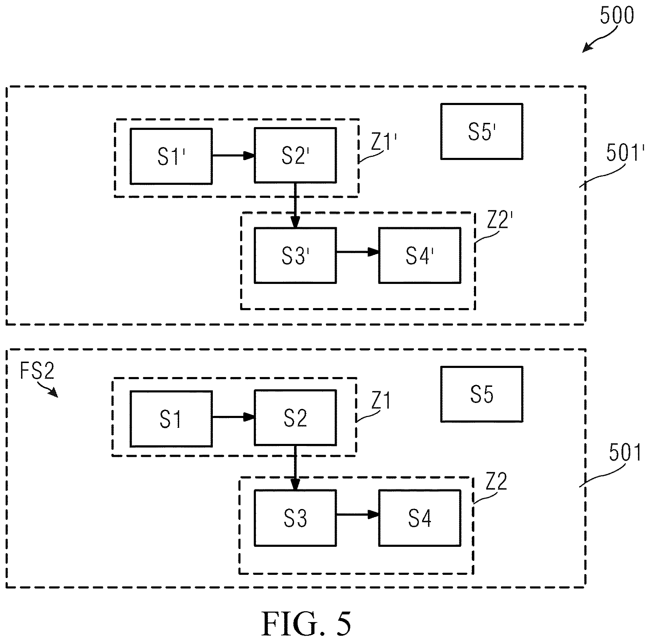

FIG. 5 is a schematic diagram 500 of a physical architecture 501 of a field system FS2 and an industrial model 501' thereof in a factory according to another embodiment of the present disclosure. The physical architecture 501 of the field system FS2 includes a plurality of field objects S1, S2, S3, S4, and S5 located in a plurality of stations, where the field objects S1 and S2 are located in a zone Z1, and the field objects S3 and S4 are located in a zone Z2. The industrial model 501' has a plurality of corresponding virtual objects S1', S2', S3', S4', and S5' located in a plurality of stations, where SX (X=1 to 5) is in one-to-one correspondence with SX', the virtual objects S 1' and S2' are located in a zone Z1', and the virtual objects S3' and S4' are located in a zone Z2'. It is assumed that the virtual objects S4' and S5' have zero variable, remaining virtual objects SX' other than the virtual objects S4' and S5' have corresponding variables VX, and values of the variables VX are changeable during operation of the field objects SX, a variable set of the virtual objects S 1' to S3' may be obtained as {V1, V2, V3} (for example, in step 101 of the method 100). Table 2 below shows an exemplary variable set of virtual objects in the industrial model 501' corresponding to the field system FS2:

**Table 2: The variable set of the virtual objects in the industrial model 501'**

| Virtual object | Variable | Annotation |
|---|---|---|
| S1' | V1 | Processing time |
| S2' | V2 | Processing quantity |
| S3' | V3 | Quantity of good products |

Initially, these variables V1 to V3 of the virtual objects S1' to S3' in the industrial model 501' have initial configuration values, which are consistent with initial conditions of the field objects S1 to S3. For example, initially, V1 is configured to be 3 min (for example, processing requires 3 min), and V3 is configured to be 2 (for example, two good products are produced per minute). With the operation of the field objects S1 to S3, actual values of these variables V1 to V3 may be different from the initial configuration values.

In the embodiment shown in FIG. 5, the physical mirror template may be defined based on the variable set of Table 2, and the physical mirror template identifies at least one variable included in a physical mirror in the variable set and a format of the physical mirror (for example, in step 102 of the method 100). For example, the physical mirror template specifies that the variables V1 and V3 are to be included in the physical mirror.

For the field system FS2, an example of the physical mirror template may be represented as follows:

```
    //Physical Mirror Template for Field System FS2
    Variables = {"V1", "V3"}
    Variable1 = "VI";
    Format = "Variable1 = [FS2_S1'_V1], VariableProperties = [VariableType=indication,
 DataType=time, CollectedTime=default, CollectedZone=Z1]"
    Variable2 = "V3";
    Format = "Variable2 = [FS2_S3'_V3], VariableProperties = [VariableType=indication,
 DataType=value, CollectedTime=default, CollectedZone=Z2]".
```

Subsequently, during operation of the field objects S1 and S3, operating status information associated with variables may be obtained (for example, in step 103 of the method 100). For example, the operating status information of the field object S1/S3 is obtained from a data source corresponding to an identifier of the field system FS2 or an identifier of the field object S1/S3. The data source may be a sensing device for monitoring the operating status information of the field object in the field system or a database for storing related data (for example, the operating status information) of the field object in the field system. For example, the field object S5 is a sensing device for monitoring operating status information of the field objects in the field system FS2, and S5 may collect the operating status information of the field objects at predetermined time intervals and store the operating status information in a memory or a database. For example, the field object S5 may be integrated in a monitored field object or may be separated from a monitored field object. For example, a plurality of fields such as a field system identifier, a data source type, a data source identifier, a field object identifier, an operating status, data, and a timestamp may be established as a uniform structure to store data of the data source. For example, the operating status information may include an operating status, data, a timestamp, and another required data. Table 3 below shows a part of an example database:

**Table 3: The example of the database**

| Field system identifier | Data source type | Data source identifier | Field object identifier | Operating status | Data | Timestamp |
|---|---|---|---|---|---|---|
| FS2 | Sensor | 0001 | S1 | Start processing | 0 min | 10:00:01 |
| | | | | | ... | 10:00:02 |
| | | | | | ... | ... |
| FS2 | Sensor | 0001 | S1 | Processing | 1 min | 10:01:01 |
| | | | | | ... | ... |
| FS2 | Sensor | 0001 | S1 | Complete processing | 2 min | 10:02:01 |
| FS2 | Sensor | 0003 | S3 | Quantity of good products | 2 | 10:00:01 |
| FS2 | Sensor | 0003 | S3 | Quantity of good products | 1 | 10:01:01 |
| FS2 | Sensor | 0003 | S3 | Quantity of good products | 2 | 10:02:01 |

Table 3 shows only a part of the example database. In Table 3, the operating status information of the field object may be obtained according to one or more of the field system identifier, the data source identifier, and the field object identifier. For example, data about the field object S1 may be collected by using 1s as a unit. It is learned, according to the operating status information of the field object S1, that an actual time from "start processing" → "processing" → "complete processing" is 2 min. For example, data of the field object S2 may be collected by using 1 min as a unit, and it is learned that a quantity of good products of the field object S2 differs in different time periods according to operating status information of the field object S2.

In the example database, in addition to the sensor, the "data source type" field may further include another type of sensing device, or may include another device that generates data.

As described above, the operating status information may be parsed to determine a current value of the variable, and the current value of the variable is formatted according to the physical mirror template, and the variable and the formatted current value of the variable are included in the physical mirror. The physical mirror may be created based on the operating status information obtained from the data source and the physical mirror template (for example, in step 104 of the method 100).

In an example, for the field system FS2, the physical mirror may be represented as follows:

```
    //Physical Mirror for Field System FS2
    Variables = {"V1", "V3"}
    Variable1 FS2_S1'_V1 = 2 min;
    Variable2 FS2_S3'_V3 = 2.
```

In another example, as shown in FIG. 5, the field objects S1 to S4 may be divided into different spatial zones, and operating status information of the field object S 1 in a spatial zone Z1 and operating status information of the field object S2 in a spatial zone Z2 may be obtained respectively. Two physical mirrors may be created based on the operating status information of the field object S1 in the spatial zone Z1 and the operating status information of the field object S2 in the spatial zone Z2. In another example, for the field system FS2, the two physical mirrors may be represented as follows:

```
    //Physical Mirror1 for Field System FS2 of Zone Z1
    Variables = {"V1"}
    Variable1 FS2_S1'_V1= 2 min.
    //Physical Mirror2 for Field System FS2 of Zone Z2
    Variables = {"V3"}
    Variable2 FS2_S3'_V3 = 2.
```

Therefore, at least one physical mirror may be selected from one or more created physical mirrors as a target physical mirror, and data of the industrial model 501' is updated by using a target physical mirror of interest in a specific spatial zone, to analyze and optimize a field process in the specific spatial zone.

Similarly, one or more physical mirrors may be created based on the operating status information in one or more time periods obtained from Table 3 and the physical mirror template. In another example, for the field system FS2, the two physical mirrors may be represented as follows:

```
    //Physical Mirror1 for Field System FS2 at Time1
    Variables = {"VI", "V3"}
    Variable1 FS2_S1'_V1= 2 min;
    Variable2 FS2_S3'_V3 = 2.
    //Physical Mirror2 for Field System FS2 at Time2
    Variables = {"VI", "V3"}
    Variable1 FS2_S1'_V1= 2.2 min;
    Variable2 FS2_S3'_V3 = 1.
```

Therefore, at least one physical mirror may be selected from one or more created physical mirrors as a target physical mirror, and the data of the industrial model 501' is updated by using a target physical mirror of interest in a specific time period, to analyze and optimize a field process in the specific time period.

In addition, in some embodiments, the physical architecture 501 of the field system FS2 may be divided into a plurality of subsystems (for example, divided according to spatial zones as described above, or divided in another manner), and each subsystem in the plurality of subsystems includes at least one field object. Correspondingly, the industrial model 501' is divided into a plurality of parts, and each part includes at least one virtual object. Applying the method 100 to each part of the industrial model 501' and the corresponding subsystem of the physical architecture 501 can implement update of this part of the industrial model 501'. For example, when the physical architecture 501 includes a large quantity of field objects, and therefore the industrial model 501' includes a large quantity of virtual objects, the division of the update of the industrial model can reduce the complexity of data collection and processing, for example, a part of data of the industrial model may not be required to be updated.

In the embodiment shown in FIG. 5, the updating data of the industrial model 501' may include: updating a previous value of the variable of the virtual object in the industrial model 401' by using the formatted current value of the variable included in the physical mirror.

It should be understood that although the embodiments of FIG. 3 and FIG. 5 show only one field system, for the purpose of exemplary but not limitation, these embodiments may be applicable to a case of more than one field system.

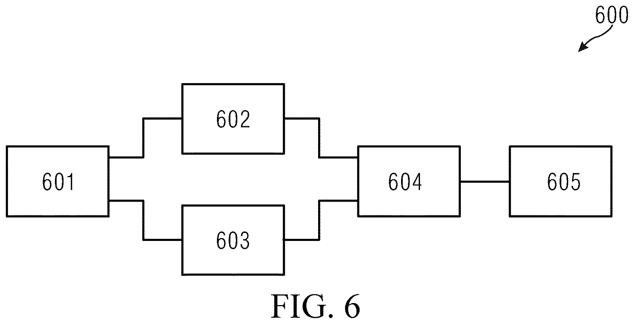

FIG. 6 is an apparatus 600 for updating an industrial model of a field system according to an embodiment of the present disclosure. Referring to FIG. 6, the apparatus 600 includes a variable obtaining unit 601, a defining unit 602, an information obtaining unit 603, a creation unit 604, and an updating unit 605. The variable obtaining unit 601 may be configured to obtain, from a parameter set associated with an industrial model, a variable set of a virtual object in the industrial model, where the virtual object corresponds to a field object in a field system, and a value of each variable in the variable set is changeable during operation of the field object. The defining unit 602 may be configured to define a physical mirror template based on the variable set, where the physical mirror template represents at least one variable included in at least one physical mirror in the variable set and a format of the at least one physical mirror. The information obtaining unit 603 may be configured to obtain operating status information of the field object from a data source associated with the field system, where the operating status information is associated with the variable set. The creation unit 604 may be configured to create the at least one physical mirror based on the operating status information and the physical mirror template. The updating unit 605 may be configured to update data of the industrial model by using the at least one physical mirror. The units in FIG. 6 may be implemented by software, hardware (for example, an integrated circuit or a programmable logic device), or a combination of software and hardware.

In some embodiments, the variable obtaining unit 601 may be further configured to: select the variable set from the parameter set according to an object property of the virtual object.

In some embodiments, the information obtaining unit 603 may be further configured to: obtain the operating status information of the field object from the data source corresponding to an identifier of the field system or an identifier of the field object.

In some embodiments, the creation unit 604 may be further configured to: parse the operating status information to determine a current value of at least one variable; format the current value of the at least one variable according to the physical mirror template; and include the at least one variable and the formatted current value of the at least one variable in the at least one physical mirror.

In some embodiments, the updating unit 605 may be further configured to update a previous value of the at least one variable of the virtual object by using the formatted current value of the at least one variable included in the at least one physical mirror.

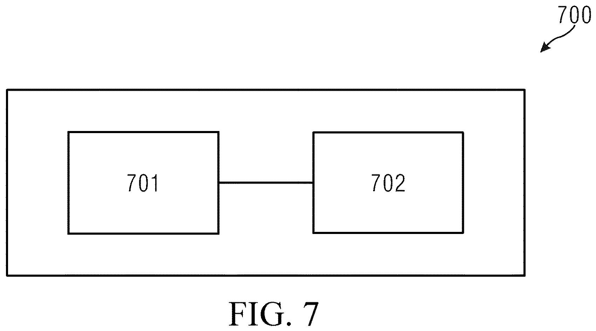

FIG. 7 is a block diagram of a computing device 700 for updating an industrial model of a field system according to an embodiment of the present disclosure. It can be seen from FIG. 7 that the computing device 700 for updating an industrial model of a field system includes a processor 701 and a memory 702 coupled to the processor 701. The memory 702 is configured to store computer-executable instructions, the computer-executable instructions, when executed, causing the processor 701 to perform the methods in the above embodiment.

In addition, alternatively, the method can be implemented through a computer-readable storage medium. The computer-readable storage medium stores computer-executable program instructions that are used for performing the method according to various embodiments of the present disclosure. The computer-readable storage medium may be a physical device that can retain and store instructions used by an instruction-executing device. The computer-readable storage medium may be, for example, but is not limited to, an electrical storage device, a magnetic storage device, an optical storage device, an electromagnetic storage device, a semiconductor storage device, or any appropriate combination of the above. In a more specific example (a non-exhaustive list), the computer-readable storage medium includes a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical coding device such as a punched card or protrusion in a groove in which instructions are stored, and any appropriate combination of the above. The computer-readable storage medium as used here is not explained as a transient signal itself, such as a radio wave or other electromagnetic waves propagated freely, an electromagnetic wave propagated through a waveguide or other transmission media (for example, a light pulse propagated through an optical fiber cable), or an electrical signal transmitted over a wire.

Therefore, in another embodiment, a computer-readable storage medium is proposed in the present disclosure. The computer-readable storage medium stores computer-executable instructions that are used for performing the method according to various embodiments of the present disclosure.

In another embodiment, a computer program product is proposed in the present disclosure. The computer program product is tangibly stored in a computer-readable storage medium, and includes computer-executable instructions that, when executed, causes at least one processor to perform the method according to various embodiments of the present disclosure.

In general, various exemplary embodiments of the present disclosure can be implemented in hardware or a dedicated circuit, software, firmware, logic, or any combination thereof. Some aspects can be implemented in hardware, while other aspects can be implemented in firmware or software executable by a controller, a microprocessor, or other computing devices. When various aspects of the embodiments of the present disclosure are illustrated or described as block diagrams, flowcharts, or represented by some other graphs, it should be understood that the blocks, apparatuses, systems, technologies, or methods described herein can be implemented, as non-restrictive examples, in hardware, software, firmware, a dedicated circuit or logic, general-purpose hardware or a controller or other computing devices, or some combinations thereof.

The computer-readable program instructions or computer program product for implementing various embodiments of the present disclosure can also be stored in a cloud, and when invocation is necessary, a user can access the computer-readable program instructions stored in the cloud and used to implement an embodiment of the present disclosure through a mobile Internet, a fixed network, or other networks, thus implementing the technical solutions disclosed according to various embodiments of the present disclosure.

Although the embodiments of the present disclosure have been described with reference to several specific embodiments, it should be understood that the embodiments of the present disclosure are not limited to the disclosed specific embodiments. The embodiments of the present disclosure are intended to cover various modifications and equivalent arrangements included within the spirit and scope of the appended claims. The scope of the claims conforms to the broadest interpretation and thus includes all such modifications and equivalent structures and functions.

## Claims

1. A method for updating data of an industrial model, comprising:
obtaining, from a parameter set associated with an industrial model, a variable set of a virtual object in the industrial model, wherein the virtual object corresponds to a field object in a field system, and a value of each variable in the variable set is changeable during operation of the field object;
defining a physical mirror template based on the variable set, wherein the physical mirror template represents at least one variable comprised in at least one physical mirror in the variable set and a format of the at least one physical mirror;
obtaining operating status information of the field object from a data source associated with the field system, wherein the operating status information is associated with the variable set;
creating the at least one physical mirror based on the operating status information and the physical mirror template; and
updating data of the industrial model by using the at least one physical mirror.

2. The method according to claim 1, wherein the obtaining, from a parameter set associated with an industrial model, a variable set of a virtual object in the industrial model comprises:
selecting the variable set from the parameter set according to an object property of the virtual object.

3. The method according to claim 1, wherein the format of the at least one physical mirror comprises: a name of the at least one variable and a corresponding variable property, and the variable property comprises at least one of a variable type, a data type, a collected time, and a collected zone.

4. The method according to claim 1, wherein the obtaining operating status information of the field object from a data source associated with the field system comprises:
obtaining the operating status information of the field object from the data source corresponding to an identifier of the field system or an identifier of the field object.

5. The method according to claim 1, wherein
the obtaining operating status information of the field object from a data source associated with the field system comprises: obtaining operating status information of the field object in at least one time period; and
the creating the at least one physical mirror based on the operating status information and the physical mirror template comprises: creating the at least one physical mirror based on the operating status information of the field object in the at least one time period and the physical mirror template.

6. The method according to claim 1, wherein
the obtaining operating status information of the field object from a data source associated with the field system comprises: obtaining operating status information of the field object in at least one spatial zone; and
the creating the at least one physical mirror based on the operating status information and the physical mirror template comprises: creating the at least one physical mirror based on the operating status information of the field object in the at least one spatial zone and the physical mirror template.

7. The method according to claim 5 or 6, wherein the updating data of the industrial model by using the at least one physical mirror comprises:
selecting a target physical mirror from the created at least one physical mirror; and
updating the data of the industrial model by using the target physical mirror.

8. The method according to claim 1, wherein the creating the at least one physical mirror based on the operating status information and the physical mirror template comprises:
parsing the operating status information to determine a current value of the at least one variable;
formatting the current value of the at least one variable according to the physical mirror template; and
comprising the at least one variable and the formatted current value of the at least one variable in the at least one physical mirror.

9. The method according to claim 8, wherein the updating data of the industrial model by using the at least one physical mirror comprises:
updating a previous value of the at least one variable of the virtual object by using the formatted current value of the at least one variable comprised in the at least one physical mirror.

10. An apparatus for updating data of an industrial model, comprising:
a variable obtaining unit, configured to obtain, from a parameter set associated with an industrial model, a variable set of a virtual object in the industrial model, wherein the virtual object corresponds to a field object in a field system, and a value of each variable in the variable set is changeable during operation of the field object;
a defining unit, configured to define a physical mirror template based on the variable set, wherein the physical mirror template represents at least one variable comprised in at least one physical mirror in the variable set and a format of the at least one physical mirror;
an information obtaining unit, configured to obtain operating status information of the field object from a data source associated with the field system, wherein the operating status information is associated with the variable set;
a creation unit, configured to create the at least one physical mirror based on the operating status information and the physical mirror template; and
an updating unit, configured to update data of the industrial model by using the at least one physical mirror.

11. The apparatus according to claim 10, wherein the variable obtaining unit is further configured to:
select the variable set from the parameter set according to an object property of the virtual object.

12. The apparatus according to claim 10, wherein the information obtaining unit is further configured to:
obtain the operating status information of the field object from the data source corresponding to an identifier of the field system or an identifier of the field object.

13. The apparatus according to claim 10, wherein the creation unit is further configured to:
parse the operating status information to determine a current value of the at least one variable;
format the current value of the at least one variable according to the physical mirror template; and
comprise the at least one variable and the formatted current value of the at least one variable in the at least one physical mirror.

14. The apparatus according to claim 13, wherein the updating unit is further configured to:
update a previous value of the at least one variable of the virtual object by using the formatted current value of the at least one variable comprised in the at least one physical mirror.

15. A computing device, comprising:
a processor; and
a memory, configured to store computer-executable instructions, the computer-executable instructions, when being executed, causing the processor to perform the method according to any one of claims 1 to 9.

16. A computer-readable storage medium, having computer-executable instructions stored thereon, the computer-executable instructions being used for performing the method according to any one of claims 1 to 9.

17. A computer program product, tangibly stored on a computer-readable storage medium and comprising computer-executable instructions, the computer-executable instructions, when being executed, causing at least one processor to perform the method according to any one of claims 1 to 9.
